# FASCICULE DE BREVET EUROPEEN

(11) **EP 1 922 391 B1**
(45) Date de publication et mention de la délivrance du brevet: **31.12.2014**
(21) Numéro de dépôt: 06794352.2
(22) Date de dépôt: 24.08.2006
(51) Int. Cl.: C10G 49/00, B01J 8/02, B01J 8/04

(54) **PLATEAU FILTRANT POUR REACTEUR A LIT FIXE A CO-COURANT DESCENDANT DE GAZ ET DE LIQUIDE**
FILTERPLATTE FÜR EINEN FESTBETTREAKTOR MIT GLEICHSTROM-GAS-FLÜSSIGKEITS-ABWÄRTSFLUSS
FILTER PLATE FOR A FIXED-BED REACTOR WITH A CO-CURRENT GAS-LIQUID DOWNFLOW

(30) Priorité: 26.08.2005 FR 0508845
(43) Date de publication de la demande: 21.05.2008
(73) Titulaire: Institut Français du Pétrole, 92852 Rueil Malmaison Cedex (FR)
(72) Inventeur: KOUDIL, Abdelhakim, F-69001 Lyon (FR); BOYER, Christophe, F-69390 Charly (FR)
(86) Numéro de dépôt international: PCT/FR2006/001978
(87) Numéro de publication internationale: WO 2007/023225

(56) Documents cités:
- FR-A- 1 495 081
- FR-A- 2 308 397
- US-A- 3 958 952

## Description

### DOMAINE DE L'INVENTION

L'invention concerne le domaine des plateaux distributeurs destinés à alimenter en gaz et en liquide des réacteurs chimiques fonctionnant à co-courant descendant de gaz et de liquide.

On rencontre de tels réacteurs dans le domaine du raffinage, plus particulièrement dans les réactions d'hydrogénation sélective de diverses coupes pétrolières, et plus généralement dans les hydrotraitements qui nécessitent des flux d'hydrogène sous pression élevée et travaillent avec des charges liquides lourdes pouvant contenir des impuretés constituées de particules solides colmatantes.

Dans certains cas en effet, la charge liquide contient des impuretés qui peuvent se déposer sur le lit catalytique lui même et, au fil du temps, réduire le volume interstitiel de ce lit catalytique.

Parmi ces charges colmatantes, on peut citer les mélanges d'hydrocarbures ayant de 3 à 50 atomes de carbone et préférentiellement de 5 à 30 atomes de carbone, et pouvant contenir une proportion non négligeable de composés insaturés ou poly-insaturés acétyléniques ou diéniques, ou une combinaison de ces différents composés, la proportion totale de composés insaturés pouvant aller jusqu'à 90% poids dans la charge. On peut citer à titre d'exemple représentatif des charges concernées par la présente invention l'essence de pyrolyse, la pyrolyse désignant un procédé de craquage thermique bien connu de l'homme du métier.

On peut trouver une description de ce type de procédés et des produits correspondants dans l'ouvrage " Raffinage et Génie chimique" de P. Wuithier paru aux éditions Technip, page 708.

La présente invention permet de limiter le dépôt de particules colmatantes au sein du lit catalytique. Elle contribue ainsi au maintien de l'homogénéité du lit du point de vue de la fraction vide donc de la qualité de l'écoulement, et elle permet également de limiter l'augmentation de la perte de charge.

En effet, lorsqu'un bouchage se produit au sein d'un lit catalytique, on constate très vite une montée de la perte de charge de l'écoulement au travers du réacteur.

La perte de charge peut devenir telle que l'exploitant est obligé d'arrêter le réacteur et de remplacer une partie ou la totalité du catalyseur, ce qui entraîne bien sûr une réduction considérable des durées de cycles du procédé.

Le bouchage d'une partie du lit catalytique peut être dû à plusieurs mécanismes. Directement, la présence de particules dans le flux de la charge peut entraîner un bouchage par dépôt des dites particules au sein du lit catalytique, ce dépôt ayant pour effet de réduire la fraction vide.

Indirectement, la formation d'une couche de produits issus des réactions chimiques, typiquement le coke, mais éventuellement d'autres produits solides dérivés des impuretés présentes dans la charge, produits qui se déposent à la surface des grains de catalyseur, peut également contribuer à la réduction de la fraction vide du lit.

De plus, le dépôt des particules colmatantes pouvant se faire au sein du lit de manière plus ou moins aléatoire, il peut en résulter des hétérogénéités dans la répartition de la fraction vide de ce lit qui vont se traduire par la création de chemins préférentiels.

Ces chemins préférentiels sont extrêmement préjudiciables sur le plan hydrodynamique puisqu'ils perturbent plus ou moins gravement l'homogénéité de l'écoulement des phases au sein du lit et peuvent conduire à des hétérogénéités au niveau de l'avancement de la réaction chimique, ainsi que sur le plan thermique.

### EXAMEN DE L'ART ANTERIEUR

Le brevet US-3,702,238 propose un système de conduites munies de disques de rupture tarés qui ont pour but de dévier une partie de l'écoulement des réactifs lorsque le lit catalytique se colmate. La montée en pression a pour effet de rompre le disque de rupture et de permettre l'écoulement de la charge au travers des conduites.

L'effet instantané de la dérivation d'une partie de l'écoulement à travers les conduites est une réduction importante de la perte de charge. L'entrée des conduites est située en amont ou en aval d'un plateau distributeur, mais aucun système n'est prévu pour dévier de façon contrôlée ou indépendante l'écoulement liquide et l'écoulement gaz.

Aucun dispositif de redistribution n'est prévu dans ce cas pour homogénéiser l'écoulement à la sortie des conduites. Ce dispositif a en outre le désavantage d'être sensible aux variations brutales de pression.

Les brevets US-3,607,000 et FR7513027 proposent des systèmes composés de paniers filtrants placés en amont ou en tête du lit catalytique pour collecter les impuretés véhiculées par l'écoulement des réactifs. Dans ce cas, un volume non négligeable du lit est occupé par les dits paniers qui n'empêchent d'ailleurs pas l'encrassement des fractions du lit situées entre les paniers. D'autre part, pour les applications en écoulement gaz/liquide, le système ne permet pas de contrôler une distribution homogène de l'écoulement gaz/liquide entre les paniers et en aval des paniers.

Dans l'article de T.H. Lindstrom et al. paru dans Hydrocarbon Processing, en février 2003, (pages 49-51), un système de filtres extérieurs est décrit, mais ce système ne résout pas tous les types de bouchage et le coût de cette solution est très élevé.

Les brevets US-4,313,908 ou EP-0.050.505-A2 décrivent des dispositifs qui permettent de diminuer l'augmentation de la perte de charge dans le lit catalytique en déviant une partie de l'écoulement au travers de tubes. Une série de tubes formant court circuit traverse le lit catalytique. L'entrée de ces tubes est située à l'aval d'un plateau distributeur et la sortie de ces tubes débouche au dessus de l'entrée du lit catalytique à différents niveaux. Le système permet ainsi de dévier indépendamment les écoulement de gaz et de liquide à condition qu'un niveau liquide s'établisse à l'amont du lit. Le dispositif décrit dans les brevets cités ne permet pas de contrôler le ratio entre les débit liquide et gaz déviés dans les tubes composant le dit système. En effet, le gaz sera dévié dés le début du fonctionnement du réacteur et le liquide ne sera dévié que lorsqu'un niveau suffisant de liquide s'établira au dessus du lit du fait de l'encrassement.

En outre, en sortie des dispositifs décrits dans les deux brevets cités, il n'y a aucun effet de distribution des fluides ce qui nécessite la mise en place en aval du dispositif, d'un plateau distributeur ou d'un système équivalent. Dans le cas de la présente invention la fonction de distribution est incorporée au système de filtration pour former un dispositif unique.

La demande de brevet plus récente WO03/000401 A1 décrit un dispositif utilisant des tubes formant court circuit, couplé avec des chambres formant également court circuit, et servant à la capture des éventuelles impuretés contenues dans la charge. Ce dispositif ne comporte pas de système de redistribution efficace des effluents gaz/liquide en sortie des dites chambres lorsque le système est utilisé en écoulement gaz/liquide.

Dans le brevet US 3,958,952 le plateau objet de l'invention est constitué d'une série d'unités de filtration chacune étant constituée d'une alternance de chambres concentriques, les unes vides et les autres occupées par des "corps filtrants" qui ne sont pas précisés.

Dans un tel système la fonction de filtration est complètement séparée de la fonction de mélange et de distribution, alors que dans le dispositif objet de la présente invention, il y a une véritable synergie entre le lit de filtration et les cheminées de mélange comme il sera expliqué plus loin.

En effet le lit de filtration directement intégré au plateau a une fonction secondaire de stabilisation de l'interface gaz /liquide située au dessus du plateau, et contribue ainsi à une alimentation uniforme en liquide des cheminées de mélange et de distribution qui font partie intégrante du dit plateau.

Le brevet US 4,229,418 décrit un système de plateau comportant des éléments de filtration, mais le terme filtration dans le contexte de ce brevet, signifie une perméabilité par rapport aux fluides du procédé et une imperméabilité par rapport aux particules de catalyseur alors qu'au sens de la présente invention, le terme filtration signifie la capacité à retenir des particules colmatantes contenues dans la charge.

Enfin, le dispositif décrit dans la présente invention présente une compacité remarquable au contraire de ceux de l'art antérieur, et permet donc de disposer de plus de catalyseur dans un réacteur de volume donné, et ainsi d'augmenter son efficacité.

### DESCRIPTION SOMMAIRE DES FIGURES

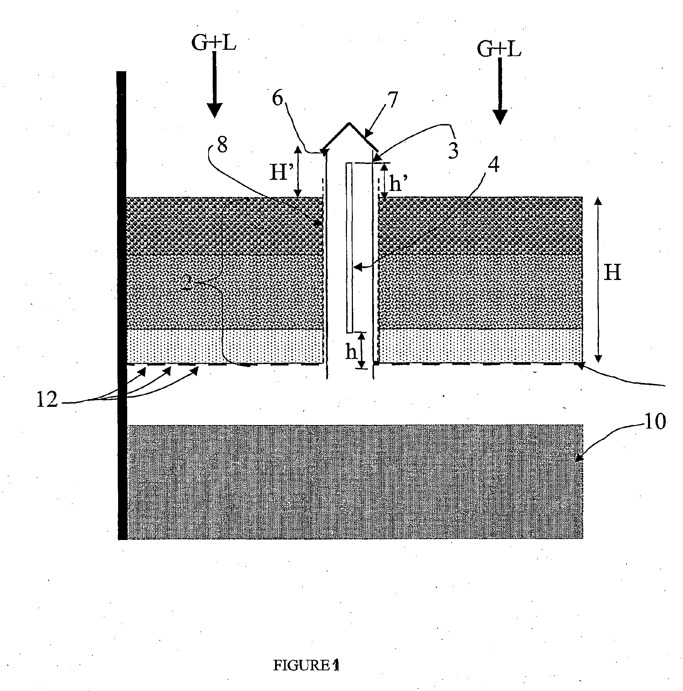

La figure 1 représente un schéma d'un plateau distributeur filtrant selon l'invention, le dit plateau étant placé en amont d'un lit catalytique alimenté par une charge ayant une partie gaz et une partie liquide.
La figure II représente les courbes d'évolution en fonction du temps de la quantité d'impuretés déposées (courbe A), de la perte de charge de part et d'autre du lit catalytique sans lit de filtration (courbe B), et de la perte de charge de part et d'autre du lit catalytique avec un plateau selon l'invention, c'est à dire muni d'un lit de filtration.

### DESCRIPTION SOMMAIRE DE L'INVENTION

Le dispositif décrit dans la présente invention permet de piéger les particules colmatantes contenues dans l'écoulement liquide constituant une partie de la charge d'un réacteur fonctionnant à co-courant descendant de gaz et de liquide, au moyen d'un plateau distributeur spécifique comportant un milieu filtrant.

La présente invention consiste en un dispositif permettant simultanément de distribuer la phase gaz et la phase liquide alimentant un réacteur en lit fixe fonctionnant à co-courant descendant des dites phases, tout en assurant une fonction de filtration vis à vis des impuretés contenues dans la phase liquide constituant une partie de la charge à traiter.

Plus précisément, le dispositif selon l'invention est un dispositif de filtration et de distribution d'une phase gaz et d'une phase liquide constituant l'alimentation d'un réacteur comportant au moins un lit fixe de catalyseur, fonctionnant à co-courant descendant de gaz et de liquide, la phase liquide étant généralement chargée en particules colmatantes, ledit dispositif comprenant un plateau situé en amont du lit catalytique, ledit plateau étant constitué d'un plan de base sensiblement horizontal et solidaire des parois du réacteur et auquel sont fixées des cheminées sensiblement verticales, ouvertes à leur extrémité supérieure pour l'admission du gaz, et à leur extrémité inférieure pour l'évacuation du mélange gaz liquide destiné à alimenter le lit catalytique situé en aval, les dites cheminées étant percées sur une certaine fraction de leur hauteur d'une fente latérale continue ou d'orifices latéraux pour l'admission du liquide, ledit plateau supportant un lit de filtration entourant les cheminées, et ledit lit de filtration étant constitué d'au moins une couche de particules de taille inférieure ou égale à la taille des particules du lit catalytique.

Le lit de filtration faisant partie du plateau distributeur, il est généralement composé de plusieurs couches de particules de taille différente.

Les particules composant les différentes couches du lit de filtration sont généralement inertes et le plus souvent formées de silice ou d'alumine, ou de tout autre substance céramique.

Dans certains cas toutefois, il pourra être intéressant qu'une couche au moins du lit de filtration soit composée de particules actives au sens de la réaction chimique ayant lieu sur le lit catalytique situé en aval du plateau distributeur filtrant. Dans ce cas, les particules actives seront de préférence composées d'un catalyseur identique ou appartenant à la même famille que le catalyseur du lit catalytique.

Dans une autre variante du dispositif selon l'invention, le lit de filtration est composé d'un garnissage structuré dont la porosité varie entre 35% et 50% (0,35 à 0,50).

De façon à éviter le bouchage des orifices latéraux des cheminées ou de la fente latérale, chaque cheminée est généralement séparée du lit de filtration qui l'entoure au moyen d'une grille de maille suffisamment fine, c'est à dire de taille de maille inférieure à celle des particules du lit de filtration. Dans ce cas, la distance séparant la cheminée du lit de filtration est généralement comprise entre 5 mm et 20 mm.

Le dispositif de filtration et de distribution selon l'invention est donc un plateau filtrant distributeur dont le plan de base supportant les cheminées et le lit de filtration est, de manière préférée, muni d'orifices avec une densité d'orifices supérieure à 100 orifices par m² de section de réacteur.

Le dispositif de filtration et de distribution selon la présente invention permet un allongement significatif de la durée de cycle du catalyseur. Généralement, le remplacement périodique du lit de filtration est réalisé avec une périodicité d'au moins 6 mois.

Le dispositif de filtration et de distribution selon l'invention est particulièrement intéressant à mettre en oeuvre dans les réacteurs d'hydrotraitement, d'hydrogénation sélective, ou de conversion de résidus ou de coupes hydrocarbonées de point d'ébullition initial supérieur à 250°C.

### DESCRIPTION DETAILLEE DE L'INVENTION

Le dispositif objet de la présente invention se compose d'un plateau distributeur comportant un plan de base sensiblement horizontal, solidaire des parois du réacteur, sur lequel sont fixées un ensemble de cheminées sensiblement verticales, munies d'une ouverture supérieure et d'une ouverture inférieure, et perforées d'orifices latéraux répartis tout au long de leur parois verticales.

La partie gaz de l'alimentation pénètre à l'intérieur des cheminées essentiellement par l'ouverture supérieure, et la partie liquide de l'alimentation pénètre à l'intérieur des cheminées essentiellement par les orifices latéraux. Le terme "essentiellement" signifie qu'au moins 50 %, et préférentiellement au moins 80 % du gaz et du liquide pénètre respectivement à l'intérieur des cheminées par l'ouverture supérieure et par les orifices latéraux.

Le mélange du gaz et du liquide s'effectue à l'intérieur des cheminées, et le mélange résultant quitte les cheminées par l'ouverture inférieure.

Les orifices latéraux peuvent former une fente continue s'étendant sur la majeure partie de la hauteur des cheminées. On continuera dans la suite du texte à parler d'orifices latéraux, en incluant sous cette appellation le cas d'une fente continue.

Le plateau distributeur supporte un lit de filtration constitué d'au moins un solide granulaire faisant office de filtre, le dit lit solide granulaire entourant chacune des cheminées sur une fraction de leur hauteur.

Les cheminées dépassent généralement le niveau du lit de filtration d'une hauteur (H') au moins égale à 30 mm, de préférence supérieure à 35 mm, voire à 40 mm.

Le lit de filtration peut comporter plusieurs couches de particules de forme quelconque.

La taille des particules constituant chaque couche du lit de filtration diminue du haut vers le bas du lit de filtration.

Les particules de la couche inférieure (ou la plus basse) possède une taille moyenne de préférence inférieure à la taille des particules de catalyseur constituant le lit catalytique situé en aval du plateau distributeur.

De manière générale, la taille des particules de chaque couche varie entre 1 et 30 mm, et préférentiellement entre 1 et 20 mm.

Dans une variante du dispositif de filtration et de distribution selon l'invention, le lit de filtration est composé d'au moins deux couches de particules solides, la taille des particules d'une couche donnée étant inférieure à celle des particules de la couche immédiatement supérieure.

Dans une variante particulière du dispositif selon l'invention, la taille des particules de la couche supérieure du lit de filtration est comprise entre 5 mm et 30 mm, et la taille des particules de la couche inférieure est comprise entre 2 mm et 10 mm.

A titre purement illustratif, et sans que cela constitue une quelconque limitation, un lit de filtration conforme au dispositif selon l'invention peut être constitué:
- d'une couche supérieure représentant 25 % de la hauteur totale du lit de filtration, et composée de particules de taille supérieure (de préférence d'au moins 10%) à celle des grains de catalyseur, .
- d'une couche intermédiaire représentant 25 % de la hauteur totale du lit de filtration, et composée de particules de taille approximativement égale à celle des grains de catalyseur,
- d'une couche inférieure représentant 50 % de la hauteur totale du lit de filtration, et composée de particules de taille inférieure (de préférence d'au moins 10%) à celle des grains de catalyseur.

Les particules formant le lit de filtration peuvent avoir une forme quelconque, par exemple sphérique ou cylindrique, avec ou sans volume vide à l'intérieur. Elles sont généralement inertes, mais peuvent éventuellement être catalytiques. Dans ce dernier cas, les particules actives du lit de filtration sont généralement constituées d'un catalyseur de la même famille que le catalyseur utilisé dans le lit catalytique situé en aval du lit de filtration.

Le lit de filtration peut également être constitué d'éléments de garnissage offrant une importante surface de captation des impuretés tout en offrant une fraction de vide élevée.

A titre d'exemple de tels éléments de garnissage, on peut citer des particules inertes composés de titane et d'alumine de forme cylindrique de 20 mm de diamètre, dans lesquels sont aménagés des canaux cylindriques.

Comme exemple de particules actives, on peut citer des billes de 10 mm de diamètre contenant du nickel-molybdène ou cobalt-molybdène, ainsi que de l'alumine.

Un exemple de composition d'un lit de filtration au moyen de plusieurs couches est donné dans l'exemple détaillé faisant suite à la présente description.

La hauteur totale du lit de filtration est en général comprise pour la plupart des réacteurs industriels concernés entre 200 et 1500 mm, et préférentiellement comprise entre 300 et 600 mm.

Les orifices latéraux s'étendent sur la majeure partie de la hauteur des cheminées, mais le plus bas d'entre eux doit être de préférence situé à une hauteur minimale (h) par rapport au plan de base du plateau, de préférence égale à 50 mm au dessus du plan de base du dit plateau, voire égale à 60 mm. On appelle plan de base du plateau le plan, solidaire des parois du réacteur, et supportant le lit de filtration.

Les orifices s'étagent de préférence sur toute la hauteur de la cheminée jusqu'à une hauteur maximale (h') qui est de préférence égale à 20 mm au dessus de la surface supérieure du lit de filtration, voire égale à 15 mm.

Les hauteurs minimale et maximale d'étagement des orifices latéraux peuvent s'appliquer également au cas où l'on a affaire à une fente continue.

Le diamètre intérieur des cheminées est généralement compris entre 10 mm et 150 mm, et préférentiellement compris entre 25 mm et 80 mm.

Selon un mode de réalisation préféré de invention, une zone de séparation entourant chaque cheminée évite le contact direct du lit de filtration avec les cheminées, de manière à empêcher toute obturation des orifices latéraux ou de la fente latérale des cheminées par les particules solides ou les éléments de garnissage constituant le lit de filtration.

Dans ce cas, la distance séparant la cheminée du lit de filtration est généralement comprise entre 5 mm et 20 mm.

Le lit de filtration se colmate progressivement au fil du temps en commençant par les couches inférieures, et il se crée sensiblement une interface entre la portion inférieure colmatée, et la portion supérieure non colmatée.

Le liquide traverse le lit de filtration sur sa portion supérieure non colmatée, et pénètre à travers les cheminées par les orifices latéraux.

La phase gaz est majoritairement introduite à l'intérieur des cheminées par leur ouverture supérieure.

Une partie plus ou moins importante du gaz est également introduite par les orifices latéraux des cheminées ou par la fente latérale.

L'ouverture supérieure des cheminées est généralement située à une hauteur H' au dessus du lit de filtration et est généralement protégée par un chapeau ou toute forme équivalente, ayant pour but d'empêcher l'introduction directe de liquide par la dite ouverture supérieure des cheminées.

Le liquide introduit par les orifices latéraux ou la fente latérale se mélange alors à la phase gaz à l'intérieur de la cheminée, et le mélange résultant est évacué de la cheminée par l'ouverture inférieure, puis est distribué vers le lit catalytique situé en aval du plateau distributeur.

Dans la suite du texte, on appellera l'ensemble du dispositif constitué du plateau distributeur, des cheminées, et du lit de filtration supporté par le dit plateau distributeur, plateau filtrant distributeur.

Le dispositif objet de la présente invention se compose donc d'un plateau filtrant distributeur solidaire de la paroi cylindrique intérieure du réacteur et situé au dessus du lit catalytique. Lorsque le réacteur comporte plusieurs lits catalytiques distincts, chacun de ces lits catalytiques peut être alimenté par un plateau filtrant distributeur conforme à l'invention. Dans ce cas, la phase gaz et la phase liquide alimentant un plateau filtrant distributeur donné sont constitués des effluents du lit catalytique situé immédiatement au dessus, auquel s'ajoute éventuellement un fluide introduit entre deux lits catalytiques qui sera le plus souvent dans le cas des réactions d'hydrogénation ou d'hydrotraitement, un fluide de refroidissement.

Le plateau filtrant distributeur peut en outre être percé, à travers son plan horizontal de base, par des trous de forme quelconque, de manière à ce que la porosité globale due à ces trous puisse assurer une hauteur minimum de liquide sur le plateau, appelée garde liquide. Un plateau filtrant distributeur sans trou à travers son plan de base est néanmoins fonctionnel, et reste dans le cadre de la présente invention.

Le plateau filtrant distributeur supporte également les cheminées qui servent à mélanger le gaz et le liquide et à acheminer le mélange résultant vers le lit catalytique situé dans la zone aval du plateau.

La densité de ces cheminées est comprise entre 10 et 150 par m² de section de lit catalytique, et préférentiellement comprise entre 30 et 100 par m² de section de lit catalytique.

Toutes les cheminées sont munies d'orifices latéraux situés à différents niveaux étagés tout au long de la paroi verticale des cheminées, ou d'une fente longitudinale continue, permettant le passage de la phase liquide à l'intérieur des dites cheminées, et ceci quel que soit le niveau de colmatage du lit de filtration.

La forme de ces orifices latéraux ou de la fente latérale est étudiée pour s'ajuster à la variation du débit liquide au cours du cycle de fonctionnement, comme il est expliqué plus loin. Dans le cas d'une fente latérale, la forme de la dite fente peut être rectangulaire ou triangulaire avec la pointe du triangle dirigée vers le bas ou vers le haut.

Une forme de fente quelconque est possible du moment que se trouvent respectées les conditions sur la hauteur de la fente qui doit de préférence démarrer à une hauteur (h') d'au moins 50 mm au dessus du plan de base du plateau, et de préférence s'étendre jusqu'à une hauteur (h) d'au moins 20 mm au dessus du niveau supérieur du lit de filtration.

La fonction distribution de l'écoulement gaz/liquide est maintenue au fur et à mesure du colmatage, puisque l'ensemble des cheminées est toujours utilisé, et que le débit liquide reste approximativement identique entre les cheminées, ce dernier étant essentiellement conditionné par le niveau liquide s'établissant sur le plateau. On comprend ainsi l'importance d'établir et de maintenir un certain niveau liquide au dessus du plan de base du plateau filtrant.

De plus, l'existence du lit de filtration contribue à stabiliser ce niveau liquide en amortissant les fluctuations de l'interface entre le gaz et le liquide.

La distribution du liquide reste donc contrôlée tout au long de la durée de vie du lit de filtration, et l'utilisation progressive des orifices latéraux ou des fentes latérales distribués tout au long des cheminées, permet d'utiliser le lit de filtration jusqu'à sa saturation complète, sans montée du gradient de pression qui obligerait à l'arrêt de l'unité.

Une description détaillée du dispositif selon l'invention est présentée au moyen de la figure 1 qui concerne un mode de réalisation dans lequel le plateau filtrant distributeur est constitué d'un plan de base (11) supportant un lit granulaire de filtration (2) comportant trois couches dans le cas de la figure 1.

Rappelons qu'un nombre de couches plus élevé est parfaitement possible, et reste dans le cadre de la présente invention.

Le-plateau filtrant distributeur est situé dans la partie supérieure d'un réacteur alimenté par un écoulement co-courant descendant de gaz (G) et de liquide (L).

Le plateau filtrant distributeur est situé en amont d'un lit catalytique (10) dans lequel s'effectue une réaction catalytique mettant en jeu les phases gaz (G) et liquide (L) introduites en tête du réacteur.

Le plateau filtrant distributeur est constitué d'un plan de base (11) sur lequel sont fixées des cheminées (3) munies d'ouvertures latérales (4).

Les ouvertures latérales (4) sont, dans le cas de la figure 1, constituées de fentes longitudinales de forme rectangulaire, mais peuvent être constituées aussi bien d'une fente de forme non rectangulaire, par exemple triangulaire, ou d'une série d'orifices de forme quelconque distribués à différents niveaux tout au long de la hauteur des cheminées (3).

La densité des cheminées (3) est comprise entre 10 et 150 par m², et de façon préférée entre 30 et 100 par m². La répartition des cheminées (3) sur le plan de base (11) est régulière, et peut se faire selon un pas carré ou triangulaire.

La forme des particules constituant le lit de filtration (2) est définie de façon à développer une aire importante facilitant le dépôt des impuretés, tout en maintenant un volume poreux suffisant pour capter le maximum d'impuretés, et augmenter la durée de fonctionnement du filtre.

En début de cycle, un niveau liquide s'établit au dessus du plan de base (11), et l'écoulement liquide est distribué sur toute la section du réacteur au travers des orifices (12) situés sur le plan de base du plateau (11).

Rappelons qu'un plan de base sans orifice est également possible et reste dans le cadre de l'invention, mais de manière préférée le plan de base est muni d'orifices, et dans ce cas, la densité des orifices situés sur le plan de base du plateau (11) est généralement au moins égale à 100 orifices par m².

Au fur et à mesure que le lit de filtration (2) se colmate, le niveau liquide situé au dessus du plateau (11) augmente, et une partie du liquide commence à s'écouler au travers de la fente rectangulaire (4) des cheminées (3).

Au fur et à mesure du colmatage, le niveau de liquide s'élève au dessus du plan de base du plateau (11).

Lorsque le lit filtrant est totalement colmaté, le liquide s'écoule au travers de la fente latérale (4) dans sa portion située au dessus du niveau supérieur du lit de filtration (2).

Dans tous les cas, le gaz s'écoule au travers des cheminées (3) en étant principalement introduit par les ouvertures supérieures (6), éventuellement munies de chapeaux (7) pour empêcher l'introduction de liquide par les dites ouvertures supérieures (6).

Une grille circulaire (8) entoure les cheminées (3) pour laisser un volume vide entre la cheminées (3) et le lit de filtration (2), de façon à ce que les particules du lit de filtration (2) ne viennent pas obstruer la fente latérale (4) située le long des cheminées (3).

La taille des mailles de cette grille (8) sera donc inférieure au diamètre minimum des particules du lit de filtration (2) du plateau distributeur.

### EXEMPLE

L'exemple suivant a été obtenu au moyen d'une simulation utilisant une équation de cinétique pour le dépôt de particules qui correspond à un dépôt linéaire en fonction du temps.

Le réacteur a un diamètre de 1 mètre, et une hauteur totale de 5 mètres, incluant le plateau distributeur et le lit catalytique. Le lit catalytique est composé de particules d'un catalyseur traditionnel pour effectuer l'hydrogénation sélective. Il s'agit d'un catalyseur contenant du Ni déposé sur un support d'alumine.

La taille des particules de catalyseur formant le lit catalytique situé en aval du plateau distributeur est de 2 mm.

L'alimentation du réacteur se compose d'une partie liquide et d'une partie gaz.

Le liquide est constitué d'une essence de pyrolyse d'intervalle d'ébullition compris entre 50°C et 280 °C avec un point d'ébullition moyen à 120°C dans les conditions standards. La phase gaz est composée à 90 % molaire d'hydrogène, le reste étant essentiellement du méthane.

Le plateau filtrant distributeur possède 7 cheminées d'un diamètre de 50 mm et d'une hauteur de 650 mm, chaque cheminée étant munie d'une fente longitudinale rectangulaire de dimension 400 mm (hauteur de la fente) par 5 mm (largeur de la fente).

L'extrémité inférieure de la fente démarre à h = 50 mm au dessus du plan de base du plateau. Le lit de filtration se compose de 4 couches de même épaisseur notées 1,2,3,4 de bas en haut. Les particules sont des particules inertes d'alumine commercialisées par la société AXENS. Les caractéristiques de taille de particules et de porosité de chaque couche sont données dans le tableau I ci dessous.

**Tableau I. Propriétés des particules.**

| Type de particules | Diamètre (mm) | Porosité initiale de la couche |
|---|---|---|
| 1ère couche plateau filtrant | 1,0 | 0,39 |
| 2ème couche Plateau filtrant | 1,5 | 0,41 |
| 3ème couche Plateau filtrant | 2,0 | 0,41 |
| 4ème couche Plateau filtrant | 2,5 | 0,43 |
| Lit de catalyseur | 2,0 | 0,41 |

Les propriétés du gaz et du liquide aux conditions opératoires du réacteur sont données dans le tableau II ci dessous:

**Tableau II. Propriétés des fluides.**

| | |
|---|---|
| Masse volumique du liquide (kg/m3) | 710 |
| Masse volumique du gaz (kg/m3) | 15 |
| Viscosité dynamique du liquide (Pa.s) | 0,00085 |
| Viscosité dynamique du gaz (Pa.s) | 0,00002 |
| Vitesse superficielle du liquide (m/s) | 0,0062 |
| Vitesse superficielle du gaz (m/s) | 0,1000 |
| Tension superficielle (N/m) | 0,01 |

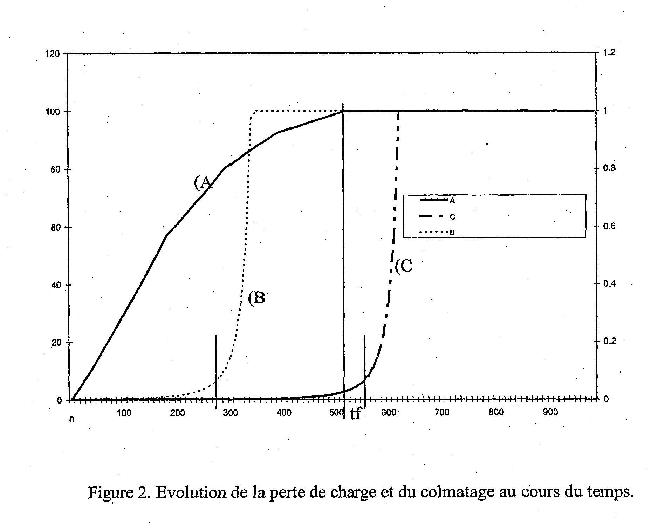

La figure 2 donne l'évolution au cours du temps:
- de la quantité d'impuretés déposée sur le lit de filtration représentée par la courbe (A). Cette courbe est obtenue en utilisant l'équation cinétique de dépôt.
- de la perte de charge mesurée de part et d'autre du lit catalytique en l'absence de lit de filtration représentée par la courbe (B)
- de la perte de charge mesurée de part et d'autre du lit catalytique en présence du lit de filtration selon l'invention représentée par la courbe (C).

La courbe (B) et la courbe (C) sont approximativement parallèles avec un décalage dans le temps.

Ce décalage dans le temps correspond au colmatage progressif du lit de filtration.

La durée du colmatage s'étend depuis le temps t0 jusqu'au temps tf, qui correspond à la saturation du lit de filtration repéré par le palier de la courbe (A).

Au temps tf, la courbe (A) atteint son palier, et au delà du temps tf, les impuretés contenues dans la charge liquide ne sont plus retenues par le lit de filtration.
- Avec le plateau sans lit de filtration (selon l'art antérieur), la perte de charge de part et d'autre du lit catalytique augmente brutalement à partir du temps tb, jusqu'à atteindre la valeur limite de la perte de charge admissible par le réacteur.
- Avec le plateau filtrant possédant son lit de filtration selon la présente invention, la perte de charge de part et d'autre du lit catalytique augmente brutalement à partir du temps tc nettement décalé par rapport au temps tb. C'est le décalage tc-tb qui quantifie l'amélioration apportée par le plateau selon l'invention, puisque pendant toute la durée supplémentaire correspondant à la valeur tc-tb, la perte de charge de part et d'autre du lit catalytique ne varie pratiquement pas, et reste égale à sa valeur en début de cycle t0.

Le plateau selon l'invention permet donc d'allonger la durée de cycle d'une durée équivalente à tc-tb.

Dans le cas présent, cet allongement est de 80 % par rapport à la durée de cycle avec un plateau distributeur sans lit de filtration.

## Revendications

1. Dispositif de filtration et de distribution d'une phase gaz et d'une phase liquide constituant l'alimentation d'un réacteur comportant au moins un lit catalytique fixe, ledit réacteur fonctionnant à co-courant descendant de gaz et de liquide, la phase liquide étant chargée en particules colmatantes, ledit dispositif comprenant un plateau situé en amont du lit catalytique fixe, ledit plateau étant constitué d'un plan de base sensiblement horizontal et solidaire des parois du réacteur sur lequel sont fixées des cheminées sensiblement verticales ouvertes à leur extrémité supérieure pour l'admission du gaz et à leur extrémité inférieure pour l'évacuation du mélange gaz liquide destiné à alimenter le lit catalytique situé en aval, lesdites cheminées étant percées sur une certaine fraction de leur hauteur d'une fente latérale continue ou d'orifices latéraux pour l'admission du liquide, ledit plateau supportant un lit de filtration entourant les cheminées, et ledit lit de filtration étant constitué d'au moins une couche de particules de taille inférieure ou égale à la taille des particules du lit catalytique.

2. Dispositif selon la revendication 1 dans lequel le lit de filtration est constitué d'au moins deux couches de particules, la taille des particules d'une couche donnée étant inférieure à la taille des particules de la couche immédiatement supérieure.

3. Dispositif selon l'une quelconque des revendications 1 à 2, dans lequel la densité des cheminées est comprise entre 10 et 150 par m² de section de lit, et préférentiellement comprise entre 30 et 100 par m² de section de lit.

4. Dispositif selon l'une quelconque des revendications 1 à 3, dans lequel la fente latérale ou les orifices latéraux des cheminées s'étendent depuis une position inférieure située au moins à 50 mm au dessus du plan de base du plateau, à une position supérieure située au plus à 20 mm au dessus du niveau supérieur du lit de filtration.

5. Dispositif selon l'une quelconque des revendications 1 à 4, dans lequel la hauteur totale du lit de filtration est comprise entre 200 mm et 1500 mm.

6. Dispositif selon l'une quelconque des revendications 1 à 5, dans lequel les cheminées du plateau dépassent le niveau supérieur du lit de filtration d'une hauteur (H') au moins égale à 30 mm.

7. Dispositif selon l'une quelconque des revendications 1 à 6, dans lequel la taille des particules de la couche supérieure du lit de filtration est comprise entre 5 et 30 mm, et la taille des particules de la couche inférieure est comprise entre 2 mm et 10 mm.

8. Dispositif selon l'une quelconque des revendications 1 à 7 dans lequel l'une au moins des couches constituant le lit de filtration est formé de particules actives vis à vis de la réaction chimique mise en jeu sur le lit catalytique.

9. Dispositif selon l'une quelconque des revendications 1 à 5, dans lequel le lit de filtration est composé d'un garnissage structuré dont la porosité varie de 35% à 50%.

10. Dispositif selon, l'une quelconque des revendications 1 à 9, dans lequel chaque cheminée est séparée du lit de filtration qui l'entoure, d'une distance comprise entre 5 mm et 20 mm.

11. Dispositif selon l'une quelconque des revendications 1 à 10, dans lequel le remplacement périodique du lit de filtration est réalisé avec une périodicité d'au moins 6 mois.

12. Dispositif selon l'une quelconque des revendications 1 à 11, dans lequel le plan de base du plateau filtrant distributeur est muni d'orifices avec une densité supérieure à 100 orifices par m² de section de réacteur.

13. Utilisation du dispositif de filtration et de distribution selon la revendication 1 dans un réacteur d'hydrotraitement, d'hydrogénation sélective, ou de conversion de résidus ou de coupes hydrocarbonées à nombre d'atomes de carbone pouvant aller de 3 à 50, et préférentiellement de 5 à 30.

## Patentansprüche

1. Vorrichtung zum Filtern und Verteilen einer Gasphase und einer Flüssigphase, die die Beschickung eines Reaktors bildet, die mindestens ein festes Katalysatorbett aufweist, wobei der Reaktor im absteigenden Gleichstrom von Gas und Flüssigkeit funktioniert, wobei die flüssige Phase mit kolmatierenden zusetzenden Partikeln beladen ist, wobei die Vorrichtung eine Platte aufweist, die vorgelagert vor dem festen Katalysatorbett angeordnet ist, wobei die Platte aus einer Basisebene gebildet ist, die im Wesentlichen horizontal und mit den Wänden des Reaktors verbunden ist, auf der im Wesentlichen vertikale Kamine befestigt sind, die an ihrem oberen Ende für die Gaszufuhr und an ihrem unteren Ende für den Abfluss der Gas-Flüssigkeitsmischung offen sind, die dazu bestimmt ist, das nachgelagerte Katalysatorbett zu beschicken, wobei die Kamine auf einem bestimmten Bruchteil ihrer Höhe durch einen seitlichen durchgehenden Schlitz oder durch seitliche Öffnungen für den Eintritt der Flüssigkeit durchbohrt sind, wobei die Platte ein Filterbett trägt, das die Kamine umgibt, und wobei das Filterbett mindestens aus einer Schicht aus Teilchen gebildet ist, die eine Größe aufweisen, die kleiner oder gleich der Größe der Teilchen des Katalysatorbetts ist.

2. Vorrichtung nach Anspruch 1, wobei das Filterbett aus mindestens zwei Schichten von Teilchen gebildet ist, wobei die Größe der Teilchen einer vorgegebenen Schicht kleiner ist als die Größe der Teilchen der jeweils höheren Schicht ist.

3. Vorrichtung nach einem der Ansprüche 1 bis 2, wobei die Dichte der Kamine zwischen 10 und 150 pro m² des Bettabschnitts und vorzugsweise zwischen 30 und 100 pro m² des Bettabschnitts beträgt.

4. Vorrichtung nach einem der Ansprüche 1 bis 3, wobei sich der seitliche Schlitz oder die seitlichen Öffnungen der Kamine von einer unteren Position, die mindestens 50 mm über der Basisebene der Platte gelegen ist, zu einer oberen Position erstrecken, die höchstens 20 mm über der oberen Ebene des Filterbetts gelegen ist.

5. Vorrichtung nach einem der Ansprüche 1 bis 4, wobei die Gesamthöhe des Filterbetts zwischen 200 mm und 1500 mm beträgt.

6. Vorrichtung nach einem der Ansprüche 1 bis 5, wobei die Kamine der Platte die obere Ebene des Filterbettes um eine Höhe (H') von mindestens gleich 30 mm überschreiten.

7. Vorrichtung nach einem der Ansprüche 1 bis 6, wobei die Größe der Teilchen der oberen Schicht des Filterbetts zwischen 5 und 30 mm und die die Größe der Teilchen der unteren Schicht zwischen 2 mm und 10 mm beträgt.

8. Vorrichtung nach einem der Ansprüche 1 bis 7, wobei mindestens eine der Schichten, die das Filterbett bilden, aus Teilchen gebildet ist, die gegenüber der chemischen Reaktion, die im Katalysatorbett stattfindet, aktiv sind.

9. Vorrichtung nach einem der Ansprüche 1 bis 5, wobei das Filterbett aus einer strukturierten Schüttung gebildet ist, deren Porosität von 35 % bis 50 % variiert.

10. Vorrichtung nach einem der Ansprüche 1 bis 9, wobei jeder Kamin von dem Filterbett, das ihn umgibt, in einem Abstand zwischen 5 mm und 20 mm getrennt ist.

11. Vorrichtung nach einem der Ansprüche 1 bis 10, wobei das regelmäßige Auswechseln des Filterbettes mit einer Periodizität von mindestens 6 Monaten durchgeführt ist.

12. Vorrichtung nach einem der Ansprüche 1 bis 11, wobei die Basisebene der verteilenden Filterplatte mit Öffnungen versehen ist, die eine Dichte von mehr als 100 Öffnungen pro m² Reaktorabschnitt aufweisen.

13. Verwendung der Vorrichtung zum Filtern und Verteilen nach Anspruch 1 in einem Reaktor zur Wasserstoffbehandlung, zur selektiven Hydrierung oder zur Umwandlung von Rückständen oder zur Kohlenwasserstofffraktionen mit einer Anzahl von Kohlenstoffatomen, die von 3 bis 50 und vorzugsweise von 5 bis 30 betragen kann.

## Claims

1. A device for filtering and distributing a gas phase and a liquid phase constituting the supply to a reactor comprising at least one fixed catalyst bed, said reactor functioning in a gas and liquid down-flow co-current mode, the liquid phase being charged with plugging particles, said device comprising a tray located upstream of the fixed catalytic bed, said tray being constituted by a substantially horizontal base plane which is linked to the walls of the reactor and to which substantially vertical chimneys are fixed which are opened at their upper end to admit gas and at their lower end to evacuate the gas-liquid mixture for supplying the downstream catalytic bed, said chimneys being perforated over a certain fraction of their height by a continuous lateral slot or lateral orifices for the admission of liquid, said tray supporting a filtration bed surrounding the chimneys and said filtration bed being constituted by at least one layer of particles with a size which is less than or equal to the size of the particles of the catalytic bed.

2. A device according to claim 1, in which the filtration bed is constituted by at least two layers of particles, the particle size of a given layer being less than the particle size of the immediately upper layer.

3. A device according to claim 1 or claim 2, in which the density of the chimneys is in the range from 10 to 150 per m² section of bed, preferably in the range from 30 to 100 per m² section of bed.

4. A device according to any one of claims 1 to 3, in which the lateral slot or the lateral orifices of the chimneys extend from a lower position located at least 50 mm above the base plane of the tray, to an upper position located at most 20 mm above the upper level of the filtration bed.

5. A device according to any one of claims 1 to 4, in which the total height of the filtration bed is in the range from 200 mm to 1500 mm.

6. A device according to any one of claims 1 to 5, in which the chimneys of the tray exceed the upper level of the filtration bed by a height (H') of at least 30 mm.

7. A device according to any one of claims 1 to 6, in which the particle size of the upper layer of the filtration bed is in the range from 5 to 30 mm, and the particle size of the lower layer is in the range from 2 mm to 10 mm.

8. A device according to any one of claims 1 to 7, in which at least one of the layers constituting the filtration bed is formed with particles which are active in the sense of the chemical reaction occurring in the catalytic bed.

9. A device according to any one of claims 1 to 5, in which the filtration bed is composed of a structured packing with a porosity from 35% to 50%.

10. A device according to any one of claims 1 to 9, in which each chimney is separated from the filtration bed which surrounds it by a distance in the range from 5 mm to 20 mm.

11. A device according to any one of claims 1 to 10, in which periodic replacement of the filtration bed is carried out with a periodicity of at least 6 months.

12. A device according to any one of claims 1 to 11, in which the base plane of the filtering distributor tray is provided with orifices in a density of more than 100 orifices per m² section of reactor.

13. Use of a device for filtration and distribution according to claim 1 in a hydrotreatment reactor, a selective hydrogenation reactor or a reactor for conversion of residues or hydrocarbon cuts with a number of carbon atoms from 3 to 50, preferably from 5 to 30.
